# EUROPÄISCHE PATENTANMELDUNG

(11) **EP 4 674 594 A1**
(43) Veröffentlichungstag der Anmeldung: **07.01.2026**
(21) Anmeldenummer: 25185258.8
(22) Anmeldetag: 25.06.2025
(51) Int. Cl.: B29C 49/42, B29C 49/46, B29C 49/06, B29L 31/00

(54) **BEHÄLTERBEHANDLUNGSVORRICHTUNG SOWIE VERFAHREN ZUM ABSENKEN EINER UNZULÄSSIGEN KONZENTRATION EINES FLÜCHTIGEN STERILISATIONSMITTELS**

(30) Priorität: 05.07.2024 DE 102024119160
(71) Anmelder: KHS GmbH, 44143 Dortmund (DE)
(72) Erfinder: Gerhards, Martin, 44143 Dortmund (DE); Herold, Thomas, 44143 Dortmund (DE)

(57) **Zusammenfassung**

Die Erfindung betrifft eine Behälterbehandlungsvorrichtung, insbesondere Streckblasvorrichtung oder Streckblasanlage, zum Verarbeiten von Nahrungsmittelbehältern, mit einem Behandlungsbereich und einem den Behandlungsbereich umgebenden begehbaren Zugangsbereich, wobei die Nahrungsmittelbehälter im Behandlungsbereich mittels Streckblasen verarbeitet werden, wobei anhaftende Mikroorganismen auf den jeweiligen Nahrungsmittelbehältern mittels eines Sterilisationsmittels reduziert und/oder entfernt werden und eine Abluftvorrichtung in einem Normalbetriebszustand flüchtige Bestandteile des Sterilisationsmittels zum Einhalten einer zulässigen Behandlungsluftkonzentration aus dem Behandlungsbereich abführt, indem die flüchtigen Bestandteile mittels eines Abluftgebläses aus einer dem Behandlungsbereich zugeordneten Abluftführung abgeführt sind, wobei dem Zugangsbereich eine Zusatzabluftführung mit einem Abluftventil zugeordnet ist, wobei das Abluftventil eine geschlossene Position und eine offene Position aufweist und die Zusatzabluftführung in der offenen Position des Abluftventils mit der Abluftführung verbunden ist, womit in einem Sonderbetriebszustand eine zeitweilige erhöhte Konzentration der flüchtigen Bestandteile im Zugangsbereich mittels des Abluftgebläses durch die Zusatzabluftführung abführbar ist. Des Weiteren betrifft die Erfindung ein Verfahren zum Absenken einer unzulässigen Konzentration eines flüchtigen Sterilisationsmittels im Zugangsbereich einer Behälterbehandlungsvorrichtung.

## Beschreibung

Die Erfindung betrifft eine Behälterbehandlungsvorrichtung, insbesondere eine Formstreckvorrichtung, eine Streckblasvorrichtung, eine Streckblasanlage oder eine Füllstreckvorrichtung oder auch Streckfüllvorrichtung, zum Verarbeiten von Nahrungsmittelbehältern, mit einem Behandlungsbereich und einem den Behandlungsbereich umgebenden begehbaren Zugangsbereich, wobei die Nahrungsmittelbehälter im Behandlungsbereich mittels Streckblasen verarbeitet werden, wobei anhaftende Mikroorganismen auf den jeweiligen Nahrungsmittelbehältern mittels eines in den Behandlungsbereich eingebrachten Sterilisationsmittels reduziert und/oder entfernt werden, wobei eine Abluftvorrichtung eine mit dem Behandlungsbereich luftführend verbundene Abluftführung und eine mit der Abluftführung luftfördernd wirkverbundene Gebläsevorrichtung aufweist und die Abluftvorrichtung mittels der Gebläsevorrichtung in einem Normalbetriebszustand flüchtige Bestandteile des Sterilisationsmittels zum Einhalten einer zulässigen Behandlungsluftkonzentration aus dem Behandlungsbereich abführt. Weiterhin betrifft die Erfindung ein Verfahren zum Absenken einer unzulässigen Konzentration eines flüchtigen Sterilisationsmittels im Zugangsbereich in einer solchen Behälterbehandlungsvorrichtung.

Bekannte Behälterbehandlungsvorrichtungen werden beispielsweise mit unterschiedlichen Druckniveaus betrieben, um ein Verschleppen oder Ausbringen von flüchtigen Bestandteilen eines Sterilisationsmittels zu verhindern. Weiter sind Behälterbehandlungsvorrichtungen bekannt, in denen gesundheitsschädliche Stoffe, wie beispielsweise Wasserstoffperoxid, Chlordioxid, Peressigsäure oder andere Stoffe zum Sterilisieren, abgesaugt werden. Solche Absaugungen werden permanent betrieben oder beispielsweise vor Zutritt in einen begehbaren Zutrittsbereich.

Die DE 10 2018 114 880 A1 beschreibt in diesem Zusammenhang eine Absauganlage für Warmluft zur Temperatureinstellung.

Die EP 3 581 361 A3, die EP 2 388 126 B1 sowie die DE 10 2010 022 132 A1 offenbaren Blasmaschinen mit einer spezifischen Zuführung von flüssigem Sterilisationsmittel.

Die WO 2015/024640 A1, die EP 2 295 324 B1, die EP 2 368 691 B2 und die DE 10 2011 013 118 A1 beschreiben allgemeine Verfahren oder Blasmaschinen zur Herstellung, Befüllung oder Verarbeitung steriler Behälter.

Die EP 3 036 080 B1 offenbart eine Anlage, in der eine Sterilisation mit Strahlung erfolgt.

Aufgabe der Erfindung ist es, den Stand der Technik zu verbessern.

Gelöst wird die Aufgabe durch eine Behälterbehandlungsvorrichtung, insbesondere eine Streckblasvorrichtung oder eine Streckblasanlage, zum Verarbeiten von Nahrungsmittelbehältern, mit einem Behandlungsbereich und einem den Behandlungsbereich umgebenden begehbaren Zugangsbereich, wobei die Nahrungsmittelbehälter im Behandlungsbereich mittels Streckblasen verarbeitet werden, wobei anhaftende Mikroorganismen auf den jeweiligen Nahrungsmittelbehältern mittels eines in den Behandlungsbereich eingebrachten Sterilisationsmittels reduziert und/oder entfernt werden, wobei eine Abluftvorrichtung eine mit dem Behandlungsbereich luftführend verbundene Abluftführung und eine mit der Abluftführung luftfördernd wirkverbundene Gebläsevorrichtung aufweist und die Abluftvorrichtung mittels der Gebläsevorrichtung in einem Normalbetriebszustand flüchtige Bestandteile des Sterilisationsmittels zum Einhalten einer zulässigen Behandlungsluftkonzentration aus dem Behandlungsbereich abführt, wobei dem Zugangsbereich eine Zusatzabluftführung mit einem Abluftventil zugeordnet ist, wobei die Abluftvorrichtung eine mit dem Zugangsbereich verbundene Zusatzabluftführung aufweist, wobei die Gebläsevorrichtung mit der Zusatzabluftführung luftfördernd wirkverbunden ist und die Abluftvorrichtung in einem Sonderbetriebszustand flüchtige Bestandteile des Sterilisationsmittels zum Einhalten einer zulässigen Zugangsluftkonzentration mittels der Gebläsevorrichtung aus dem Zugangsbereich abführt.

Damit kann im Sonderbetriebszustand beispielsweise eine zeitweilige erhöhte und beispielsweise gesundheitsgefährdende Konzentration der flüchtigen Bestandteile abgeführt und entsprechend gesenkt werden.

Folgende Begriffe seien in diesem Zusammenhang erläutert:

Eine "Behälterbehandlungsvorrichtung" ist beispielsweise eine Anlage oder eine Maschine, in der Behälter oder Behälterrohlinge behandelt werden. Insbesondere handelt es sich dabei um eine sogenannte "Streckformvorrichtung", "Streckblasvorrichtung", "Streckblasanlage" oder auch "Formfüllvorrichtung" oder auch "Streckformfüllvorrichtung", wobei in einer solchen Anlage erhitze Rohlinge, insbesondere aus einem thermoplastischen Kunststoff, für beispielsweise Nahrungsmittelbehälter mittels Streckformen, Streckblasen oder auch Formfüllen oder Streckformfüllen durch eine Kraft eines Streckwerkezuges und/oder durch einen Innendruck eines Blasfluides oder eines Füllfluides in ihre produktspezifische Form getreckt oder geblasen werden. Insbesondere im Zusammenhang mit Nahrungsmittelbehältern, also Behältern, die der Aufnahme von Nahrungsmitteln, wie beispielsweise Getränken, dienen, ist hierbei eine erhöhte Anforderung an die Hygiene und Freiheit von Mikroorganismen zu beachten. Es sei in diesem Zusammenhang darauf hingewiesen, dass ein "Streckformen" insbesondere das mechanische (Vor- )Strecken eines Rohlings mit einem Streckwerkzeug bezeichnet. Das Streckblasen wird mittels eines Streckwerkzeuges, insbesondere zum Strecken in Längsrichtung, und anschließendem oder gleichzeitigem Blasen mit einem Fluid, beispielsweise Luft oder Stickstoff, durchgeführt. Bei einem Formfüllen wird als Fluid die zum Füllen des Behälters vorgesehene Flüssigkeit, beispielsweise ein Getränk, genutzt. Es kann in diesem Zusammenhang in Abhängigkeit vom tatsächlich durchgeführten Verfahrensablauf auch der Begriff "Formfüllstrecken" oder einer "Formfüllstreckvorrichtung" verwendet werden.

Ein "Behandlungsbereich" ist dabei beispielsweise der direkt um den Streckblasvorgang oder einen vorbereitenden Vorgang angeordnete Bereich der Behälterbehandlungsvorrichtung, wobei dieser Behandlungsbereich insbesondere gegenüber einem anderen Bereich mit unterschiedlichen Qualitäten abgedichtet oder abgeschirmt sein kann. Demgegenüber ist ein begehbarer "Zugangsbereich" beispielsweise der Bereich der Behälterbehandlungsvorrichtung oder auch einer Streckblasanlage, in den beispielsweise Personal zu Wartungszwecken, Einstellzwecken oder der routinemäßigen Prüfung der Anlage eintreten kann. Dabei kann der Zugangsbereich beispielsweise mit spezifischen Schaltern oder Riegeln elektronisch oder anders verriegelt sein. Dabei ist der Zugangsbereich insbesondere ein Bereich, in den aus dem Behandlungsbereich heraustretende flüchtige Bestandteile des Sterilisationsmittels einströmen oder eintreten.

Es sei in diesem Zusammenhang darauf hingewiesen, dass der Vorgang, "dass die Nahrungsmittelbehälter im Behandlungsbereich mittels Streckblasen verarbeitet werden" insbesondere mehrere Schritte umfassen kann, wobei das erfindungsgemäße Vorgehen insbesondere auf einen Sterilisationsbereich oder einen dem Streckblasen vorgelagerten Bereich anwendbar ist. Ebenso kann jedoch auch ein beispielsweise direkt in einem Streckblasbereich und einem umliegenden Zugangsbereich vorliegender erhöhter Konzentrationswert von flüchtigen Bestandteilen erfindungsgemäß reduziert oder beseitigt werden.

"Mikroorganismen" bezeichnen dabei beispielsweise Bakterien, Hefen oder auch Schimmelpilze oder andere schädliche biologische Anhaftungen, welche beispielsweise durch ein vorhergehendes Bearbeiten, Verarbeiten oder auch Verpacken von Rohlingen der Nahrungsmittelbehälter vorhanden sind und insbesondere in Bezug auf eine spätere Verwendung für Nahrungsmittel entfernt werden müssen. Solche Mikroorganismen oder vergleichbare Kontaminationen werden häufig auch etwas unscharf oder sogar synonym als "Keime" bezeichnet. Es sei dabei insbesondere darauf hingewiesen, dass ein "Rohling" in diesem Zusammenhang den Zustand des Nahrungsmittelbehälters vor dem Behandeln, insbesondere Streckblasen, bezeichnet und ein "Nahrungsmittelbehälter" insbesondere das fertige Produkt kennzeichnet. Im Zusammenhang mit den Vorgängen zur Reduzierung oder Entfernung von Mikroorganismen in Bezug zu dieser Erfindung werden diese Begriffe teilweise synonym und abhängig vom jeweiligen Zustand und der Verarbeitungsreife innerhalb der Behälterbehandlungsvorrichtung verwendet.

Ein "Sterilisationsmittel" bezeichnet dabei insbesondere ein flüssiges oder auch gasförmiges Mittel, welches zum Zwecke der Reduzierung oder Entfernung von Mikroorganismen oder auch Keimen in den Behandlungsbereich und/oder auf die Nahrungsmittelbehälter eingebracht oder aufgebracht wird. Insbesondere handelt es sich bei einem solchen Sterilisationsmittel dabei um Wasserstoffperoxid oder andere insbesondere oxidierende Flüssigkeiten, welche jedoch naturgemäß Gesundheitsgefahren für Personen mit sich bringen. Insbesondere sind dabei im Zusammenhang mit solchen Sterilisationsmitteln maximal zulässige Arbeitsplatzkonzentrationen einzuhalten, wenn beispielsweise ein Mitarbeiter den begehbaren Zugangsbereich betritt. Gleichsam können Reaktionsprodukte eines Sterilisationsprozesses solchen maximal zulässigen Konzentrationen unterliegen, sofern beispielsweise durch die Reaktion des Sterilisationsmittels mit Mikroorganismen, Keimen oder auch anderen Verschmutzungen gesundheitsgefährdende Stoffe entstehen. Es sei darauf hingewiesen, dass das Sterilisationsmittel beispielsweise mittels gegen das Sterilisationsmittel resistenten Schläuchen, Rohrleitungen, Ventilen und/oder Düsen in den Behandlungsbereich eingebracht wird, wobei insbesondere zum Ausbringen des Sterilisationsmittels eingerichtete Düsen im Behandlungsbereich angeordnet und mittels den Schläuchen und/oder Rohrleitungen zu den jeweiligen Düsen gefördert werden. Die Anordnung der Düsen erfolgt dabei beispielsweise in direkter Nähe der Nahrungsmittelbehälter oder entsprechender Rohlinge, sodass eine entsprechende Sterilisationswirkung erzielbar ist.

Eine "Abluftvorrichtung" bezeichnet in diesem Zusammenhang eine beispielsweise mit einem Gebläse oder Ventilator betriebene Anlage, welche Luftmengen aus dem Behandlungsbereich oder auch dem Zugangsbereich absaugen oder abfördern kann. Eine "Gebläsevorrichtung" bezeichnet in diesen Zusammenhang eine technische Gesamt-Anordnung, welche ein Gebläse oder mehrere Gebläse oder auch einen Ventilator oder mehrere Ventilatoren zum aktiven und zielgerichteten Fördern von Luft, mit den flüchtigen Bestandteilen des Sterilisationsmittels belasteter Luft oder andere Gase aufweist. Dabei ist die Gebläsevorrichtung mit der Abluftführung "luftfördernd wirkverbunden", also dazu eingerichtet, durch einen Betrieb der Gebläsevorrichtung ein entsprechendes gasförmiges Medium, beispielsweise Luft oder mit den flüchtigen Bestandteilen des Sterilisationsmittels belastete Luft, das gasförmige Medium durch die Abluftführung zu fördern. Dazu kann die Gebläsevorrichtung beispielsweise ein Gebläse oder mehrere Gebläse aufweisen, welche in Rohren oder Kanälen der Abluftführung eingebaut sind.

In einem "Normalbetriebszustand" wird diese Abluftvorrichtung beispielsweise in einem festen Drehzahlbereich der Gebläsevorrichtung betrieben, sodass flüchtige Bestandteile des Sterilisationsmittels gleichmäßig abgeführt werden. "Flüchtige Bestandteile" bezeichnen in diesem Zusammenhang insbesondere gasförmige Bestandteile des Sterilisationsmittels, welche beispielsweise durch Prozesswärme oder eine Umgebungstemperatur entstehen und üblicherweise aufgrund der Eigenschaften des Sterilisationsmittels unvermeidbar sind. Ebenso können solche flüchtigen Bestandteile Reste oder Überschussmengen eines ohnehin gasförmigen oder teilweise gasförmigen Sterilisationsmittels sein. Allgemein sind solche flüchtigen Bestandteile dabei schädliche oder als schädlich empfundene Rückstände des Sterilisationsmittels.

Eine "zulässige Behandlungsluftkonzentration" bezeichnet in diesem Zusammenhang beispielsweise eine die Sicherheit von Mitarbeitern nicht gefährdende oder auch als unschädlich empfundene Konzentration solcher flüchtigen Bestandteile in der Behandlungsluft. Diese zulässige Behandlungsluftkonzentration kann dabei sowohl einem beispielsweise durch Arbeitsschutzbestimmungen festgelegten Wert als auch einem beispielsweise individuell bestimmten Wert entsprechen.

Ein "Abführen" der flüchtigen Bestandteile bezeichnet dabei insbesondere das Herausbringen der flüchtigen Bestandteile, insbesondere zusammen mit Luft im Behandlungsbereich, in einen Außenbereich, beispielsweise durch einen Schornstein oder einen Abluftschacht, sodass beispielsweise ein Abführen der insbesondere verdünnten flüchtigen Bestandteile aus einem Betriebsgebäude oder einem Arbeitsbereich möglich ist. Es sei darauf hingewiesen, dass beispielsweise auch eine Abluftnachbehandlung durchgeführt werden kann.

Eine "Zusatzabluftführung" bezeichnet beispielsweise einen zusätzlichen Luftkanal oder einen zusätzlichen Lüftungskanal, welcher mit dem Zugangsbereich fluidführend verbunden ist und beispielsweise auch ein "Abluftventil" aufweist, wobei das Abluftventil beispielsweise ein Luftventil, eine Luftklappe oder ein vergleichbar wirkendes Mittel ist, mit dem ein Schließen oder Öffnen ermöglicht ist, sodass eine geschlossene Position des Abluftventils ohne Luftführung oder mit reduzierter Luftführung und eine offene Position des Abluftventils mit offener Luftführung oder erhöhter Luftführung einnehmbar ist. **In** der offenen Position wird dann beispielsweise die Zusatzabluftführung mit der Abluftführung verbunden, sodass das die Gebläsevorrichtung oder beispielsweise auch ein Abluftgebläse insbesondere auf die Abluftführung und die Zusatzabluftführung gleichsam wirkt und damit auch aus dem Zugangsbereich ein Absaugen von beispielsweise zeitweilig erhöhten Konzentrationen der flüchtigen Bestandteile ermöglicht ist. Der Zustand, in dem die offene Position des Abluftventils eingenommen ist und damit der Zugangsbereich mit dem Abluftgebläse ebenfalls von flüchtigen Bestandteilen befreit wird, wird dann als "Sonderbetriebszustand" bezeichnet, wobei dieser Sonderbetriebszustand allgemein einen Betriebszustand bezeichnet, in welchem das Absaugen oder Abfördern der zeitweilig erhöhten Konzentration der flüchtigen Bestandteile des Sterilisationsmittels mit technischen Mitteln zielgerichtet durchgeführt wird. Beispielsweise kann ein solcher Sonderbetriebszustand durch ein Einwirken auf die Gebläsevorrichtung, ein oder mehrere Gebläse oder auch auf Ventile oder andere Schaltelemente eingestellt oder eingeregelt werden.

**In** einer Ausführungsform sind die dem Behandlungsbereich zugeordnete Abluftführung und die dem Zugangsbereich zugeordnete Zusatzabluftführung zumindest teilweise oder auch streckenweise im Wesentlichen vollständig oder vollständig als gemeinsame Abluftführung ausgeführt. Alternativ oder ergänzend kann die Gebläsevorrichtung ein mit dem Behandlungsbereich luftfördernd wirkverbundenes Abluftgebläse und ein mit dem Zugangsbereich luftfördernd wirkverbundenes Zusatzabluftgebläse aufweisen, wobei insbesondere das Zusatzabluftgebläse im Sonderbetriebszustand aktiviert ist.

Es sei dazu angemerkt, dass mit den entsprechenden vorgenannten Ausgestaltungen, jeweils oder auch in Kombination, beispielsweise ein gemeinsame Gebläse der Gebläsevorrichtung genutzt werden kann, um in einer streckenweise gemeinsamen Abluftführung mit nur einem Gebläse ein Absenken der zeitweilig erhöhten Konzentration der flüchtigen Bestandteile des Sterilisationsmittels zu bewirken oder beispielsweise in der Abluftführung und in der Zusatzabluftführung jeweilige Gebläse einzusetzen, um beispielsweise eine Absaugleistung zu erhöhen oder eine Steuerbarkeit und/oder eine Wartung durch jeweils kleinere Gebläse zu erleichtern.

Es sei weiterhin darauf hingewiesen, dass das Detektieren des notwendigen Sonderbetriebszustands, beispielsweise beim Erreichen einer zeitweilig erhöhten Konzentration der flüchtigen Bestandteile im Zugangsbereich, vor dem Zugang durch eine Person auf unterschiedliche Weise erfolgen kann. **In** einer einfachen Ausführungsform kann dabei ein Geruchstest durchgeführt werden, wenn beispielsweise eine nachhaltige Gesundheitsgefahr durch die flüchtigen Bestandteile nicht zu befürchten ist. Wird durch diesen Geruchstest festgestellt, dass ein Betreten des Zugangsbereiches noch nicht sicher möglich ist, so kann der Sonderbetriebszustand eingestellt und damit die erhöhte Konzentration der flüchtigen Bestandteile im Zugangsbereich abgesenkt werden, bis beispielsweise ein sicherer Zugang erkannt wird.

**In** einer weiteren Ausführungsform ist der Zusatzabluftführung ein Abluftventil zugeordnet, wobei das Abluftventil eine geschlossene Position und eine offene Position aufweist und die Zusatzabluftführung in der offenen Position des Abluftventils mit der Gebläsevorrichtung, insbesondere mit dem Zusatzabluftgebläse, verbunden ist, womit in einem Sonderbetriebszustand eine zeitweilige erhöhte Konzentration der flüchtigen Bestandteile im Zugangsbereich mittels der Gebläsevorrichtung, insbesondere mittels des Zusatzabluftgebläses, durch die Zusatzabluftführung abführbar ist.

Vorteilhaft wird damit im Sonderbetriebszustand ein gemeinsames Abluftgebläse genutzt, um sowohl das Absaugen von flüchtigen Bestandteilen des Sterilisationsmittels aus dem Behandlungsbereich als auch das bedarfsgerechte Absaugen einer zeitweilig erhöhten Konzentration der Bestandteile im Zugangsbereich durchführen zu können. Damit ist ein einfacher Aufbau der Behälterbehandlungsvorrichtung insbesondere ohne ein zusätzliches Abluftgebläse für den Zugangsbereich möglich. Die Erfindung ermöglicht es mit dieser Ausgestaltung, für den Sonderbetriebszustand einen durch die Abluftführung und die Zusatzabluftführung gebildeten, insgesamt vergrößerten Abluftquerschnitt zu nutzen, insbesondere ohne eine weiteres Abluftgebläse verwenden zu müssen. Auch für den Normalbetriebszustand sind dabei keine zusätzlichen teuren Bauteile vorzuhalten. Lediglich das Abluftventil und gegebenenfalls zusätzliche Rohrführungen werden benötigt, um die Erfindung anzuwenden.

Um ein automatisiertes Einnehmen des Sonderbetriebszustands zu erreichen, ist dem Zugangsbereich ein Konzentrationssensor mit einer Schalteinrichtung zugeordnet, wobei die Schalteinrichtung dazu eingerichtet ist, den Sonderbetriebszustand einzustellen und/oder das Abluftventil bei einem Detektieren eines Überschreitens einer Referenzkonzentration im Zugangsbereich mittels des Konzentrationssensors in die offene Position zu überführen. Weiterhin sei darauf hingewiesen, dass die Schalteinrichtung ebenso dazu eingerichtet sein kann, bei einem Detektieren eines Unterschreitens der Referenzkonzentration oder bei Erreichen einer zweiten Referenzkonzentration den Sonderbetriebszustand abzustellen und/oder das Abluftventil zu schließen

Ein "Konzentrationssensor" kann beispielsweise ein mittels Wärmetönungsverfahren oder auf andere Weise messender Sensor sein, welcher eine absolute oder auch relative Konzentration der flüchtigen Bestandteile des Sterilisationsmittels im Zugangsbereich detektieren kann. Insbesondere können dabei mehrere Konzentrationssensoren beispielsweise an kritischen Stellen innerhalb des Zugangsbereichs angeordnet sein. Eine Schalteinrichtung kann dann im Zusammenhang mit dem Konzentrationssensor das Detektieren und Schalten vornehmen, indem beispielsweise bei Überschreiten der Referenzkonzentration der Sonderbetriebszustand eingestellt und/oder das Abluftventil in die offene Position geschaltet wird, wobei nachfolgend beispielsweise bei einem erfolgreichen Absenken der zeitweilig erhöhten Konzentration und Detektieren eines Erreichens oder Unterschreitens der Referenzkonzentration ein Verlassen des Sonderbetriebszustandes und/oder ein Schließen des Abluftventils initiiert wird.

Die "Referenzkonzentration" ist dabei beispielsweise eine dauerhaft zu unterschreitende maximale Arbeitsplatzkonzentration im Zugangsbereich. Insbesondere wenn mittels des Konzentrationssensors und der Schalteinrichtung ein jeweiliges Überschreiten dieser Referenzkonzentration direkt erkannt und durch einstellen des Sonderbetriebszustandes oder auch durch Öffnen des Abluftventils behoben wird, ist ein direkter Zugang in den Zugangsbereich möglich. Für diesen Fall kann dann auch ein Verlassen des Sonderbetriebszustandes möglich sein, sodass beispielsweise ein Lärmpegel reduziert wird und die Arbeiten im Zugangsbereich erleichtert sind. Im Ergebnis werden mit diesem Vorgehen insbesondere Stillstandzeiten bei Erkennen einer erhöhten Konzentration vermieden. Gleichsam kann ein dauerhaftes Einhalten einer Referenzkonzentration, beispielsweise einer Kurzzeit-Maximalarbeitsplatzkonzentration für einen Zugang von beispielsweise nur 10 Minuten in den Zugangsbereich, eingehalten werden. Sofern beispielsweise zwischenzeitliche oder auch größere Wartungsarbeiten notwendig sind, kann dann durch einen zusätzlichen Steuereingriff diese Konzentration abgesenkt werden, sodass beispielsweise eine dauerhafte maximale Arbeitsplatzkonzentration eingehalten wird. Zwischenzeitliche Wartungsarbeiten können beispielsweise bei Störungen im Produktionsablauf notwendig werden.

Gemäß einer Ausführungsform ist der Gebläsevorrichtung, insbesondere dem Zusatzabluftgebläse, eine Steuerungseinrichtung oder eine Regelungseinrichtung zugeordnet, wobei die Steuerungseinrichtung oder die Regelungseinrichtung eingerichtet ist, zumindest eine erste Leistungsstufe und eine gegenüber der ersten Leistungsstufe erhöhte zweite Leistungsstufe der Gebläsevorrichtung oder auch des Zusatzabluftgebläses einzustellen, wobei die zweite Leistungsstufe dabei insbesondere in der offenen Position des Abluftventils aktiviert wird.

Mit einer solchen Steuerungseinrichtung oder Regelungseinrichtung kann damit die Gebläsevorrichtung oder auch das Zusatzabluftgebläse bedarfsgerecht leistungsgesteuert werden, sodass beispielsweise im Normalbetriebszustand nur die erste Leistungsstufe mit einer Grundlast betrieben wird und einem beispielsweise durch die Zusatzabluftführung bedingten erhöhten Abluftquerschnitt, beispielsweise durch die eingenommene offene Position des Abluftventils durch die erhöhte zweite Leistungsstufe Rechnung getragen wird.

Es sei in diesem Zusammenhang darauf hingewiesen, dass eine Steuerungseinrichtung oder auch eine Regelungseinrichtung hierbei teilweise synonym verwendet werden können, wobei das Steuern eine Ansteuerung der Gebläsevorrichtung oder auch des Zusatzabluftgebläses mit einem Führungswert bezeichnet, wobei ein Regeln eine rückgekoppelte Regelung der Gebläsevorrichtung oder auch des Zusatzabluftgebläses bezeichnet.

Dabei können auch mehrere Leistungsstufen oder eine stufenlose Leistungsregelung angewendet werden, um beispielsweise abhängig vom durch den Konzentrationssensor ermittelten Wert eine erhöhte oder reduzierte zweite Leistungsstufe einnehmen zu können, um beispielsweise energieeffizient vorgehen zu können.

Um den Zugangsbereich gleichmäßig und möglichst kurzfristig von der zeitweilig erhöhten Konzentration der flüchtigen Bestandteile des Sterilisationsmittels befreien zu können, weist die Zusatzabluftführung insbesondere mehrere Zusatzabluftrohre auf, wobei die jeweiligen Zusatzabluftrohre in einem Abstand von einander an den Zugangsbereich angeschlossen sind. Ein solcher "Abstand" kann dabei beispielsweise zwischen unterschiedlichen Anschlusspositionen der Zusatzabluftrohre am Zugangsbereich gebildet werden, wobei beispielsweise in mehreren Ecken des Zugangsbereichs, in mehreren gegenüber einander schlecht zugänglichen Bereichen oder vergleichbaren Positionen ein Absaugen mittels der Zusatzabluftrohre ermöglicht wird.

In einer Ausführungsform ist in der Abluftführung ein Katalysator zum Umwandeln und/oder Reduzieren der flüchtigen Bestandteile in der Abluft, insbesondere ein Platinkatalysator, angeordnet.

Ein solcher Katalysator, welcher eine chemische Reaktion insbesondere der flüchtigen Bestandteile des Sterilisationsmittels ohne eigene chemische Umwandlung ermöglicht, kann dabei dem Erreichen von Grenzwerten für das Abführen der Abluft aus einem Gebäude dienen. Insbesondere dient diese Ausgestaltung der Erfindung zur Reduzierung von Umweltschäden durch das Abführen der flüchtigen Bestandteile des Sterilisationsmittels.

Insbesondere ist die Behälterbehandlungsvorrichtung eine Behälterherstellungsanlage, eine Streckumformmaschine, eine Streckblasmaschine, eine Formfüllanlage oder Füllanlage oder weist eine solche auf.

Es sei in diesem Zusammenhang darauf hingewiesen, dass der erfindungsgemäße Gedanke sich insbesondere allgemein auf einen Sterilisationsbereich einer beliebigen, zum Herstellen von Nahrungsmittelbehältern dienenden Anlage bezieht. Eine Streckblasmaschine ist dabei eine Maschine, welche beispielsweise mittels Druckluft erwärmte Rohlinge zu Nahrungsmittelbehältern aufbläst, wobei eine Formfüllanlage das Füllmedium des Nahrungsmittelbehälters zum Ausformen des Nahrungsmittelbehälters nutzt. Ebenso kann eine Füllanlage, welche lediglich dem Befüllen von fertigen Nahrungsmittelbehältern dient, mit dem erfindungsgemäßen Vorgehen betrieben werden. Insbesondere wird dabei ein dem jeweiligen Produktions- oder Füllschritt vorgelagerter Sterilisationsbereich erfindungsgemäß betrieben. Die Erfindung ist jedoch auch für andere Bereiche einer solchen Anlage zum Einhalten bestimmter Konzentrationen der flüchtigen Bestandteile einsetzbar.

Insbesondere ist in diesem Zusammenhang der Behandlungsbereich ein Sterilisationsbereich einer Streckumformmaschine, einer Streckblasmaschine und/oder einer Füllstreckmaschine, wobei der Sterilisationsbereich entlang einer Verarbeitungsrichtung insbesondere einem Streckumformbereich, einem Streckblasbereich oder einem Füllstreckbereich oder Streckfüllbereich vorgelagert ist oder ein Sterilisationsbereich einer in Transportrichtung der Behälter stromaufwärts einer Streckumformmaschine, einer Streckblasmaschine, einer Streckfüllmaschine oder eine Füllstreckmaschine vorgelagerter Transport-Zuführbereich ist.

Damit werden beispielsweise die Behälter oder die Behälterrohlinge vor dem Streckblasen bereits frei von Mikroorganismen oder zumindest mit reduzierter Menge von Mikroorganismen bereitgestellt.

In einer Ausführungsform ist einem den Zugangsbereich umgebenden Umgebungsbereich ein Umgebungssensor zugeordnet, wobei bei einem Detektieren eines Überschreitens einer Referenzkonzentration im Umgebungsbereich mittels des Umgebungssensors eine Alarmeinrichtung auslösbar ist.

Damit kann beispielsweise zumindest indirekt ein Fehler in der Ansteuerung des Abluftgebläses und/oder des Abluftventils detektiert werden, sofern beispielsweise das Abluftventil nicht öffnet. Insbesondere ist ein Umgebungsbereich dabei beispielsweise eine Halle oder ein Gebäude, in dem die Behälterbehandlungsvorrichtung aufgestellt und betrieben ist. Eine "Alarmeinrichtung" ist dabei beispielsweise ein Warntonerzeuger oder eine Warnleuchte, die dann beispielsweise die Evakuierung des Gebäudes durch eine akustische oder optische Warnung einleitet.

In einem weiteren Aspekt wird die Aufgabe gelöst durch ein Verfahren zum Absenken einer unzulässigen Konzentration eines flüchtigen Sterilisationsmittels im Zugangsbereich einer Behälterbehandlungsvorrichtung gemäß einer der vorig bezeichneten Ausführungsformen, mit den folgenden Schritten:
- Betreiben der Behälterbehandlungsvorrichtung im Normalbetriebszustand, wobei flüchtige Bestandteile des Sterilisationsmittels mittels einer Gebläsevorrichtung aus dem Behandlungsbereich abgeführt werden,
- Feststellen einer zeitweilig erhöhten Konzentration der flüchtigen Bestandteile im Zugangsbereich insbesondere mittels des Konzentrationssensors,
- Einstellen des Sonderbetriebszustandes, insbesondere durch Öffnen des Abluftventils, sodass das Abluftventil insbesondere in der offenen Position ist und eine zeitweilige erhöhte Konzentration der flüchtigen Bestandteile im Zugangsbereich mittels der Gebläsevorrichtung durch die Zusatzabluftführung abgeführt wird,
sodass die unzulässige Konzentration des flüchtigen Sterilisationsmittels im Zugangsbereich abgesenkt ist.

Erfindungsgemäß kann die Behälterbehandlungsvorrichtung im Normalbetriebszustand oder Sonderbetriebszustand betrieben werden, wobei flüchtige Bestandteile des Sterilisationsmittels mittels der Gebläsevorrichtung aus dem Behandlungsbereich abgeführt werden. Sofern dann das Feststellen einer zeitweilig erhöhten Konzentration der flüchtigen Bestandteile im Zugangsbereich, beispielsweise mittels des Konzentrationssensors oder durch eine andere Detektion, erfolgt, kann das Einstellen des Sonderbetriebszustands je nach Ausgestaltung der jeweiligen technischen Komponenten auch durch Öffnen des Abluftventils durchgeführt werden.

Folglich ein sicherer und zuverlässiger Betrieb der Behälterbehandlungsvorrichtung erreicht, wobei insbesondere Zugangszeiten in den Zugangsbereich deutlich reduziert werden, wenn beispielsweise ein automatisches Einstellen des Sonderbetriebszustands anhand eines Konzentrationssensors erfolgt.

Dabei erfolgt das Einstellen des Sonderbetriebszustands insbesondere anhand eines Sensorsignals des Konzentrationssensors und insbesondere mittels der Schalteinrichtung.

Im Weiteren wird die Erfindung anhand von Ausführungsbeispielen näher erläutert. Es zeigen
- Figur 1: eine Übersichtsdarstellung einer Anlage in einer schematischen Schaltskizze, sowie

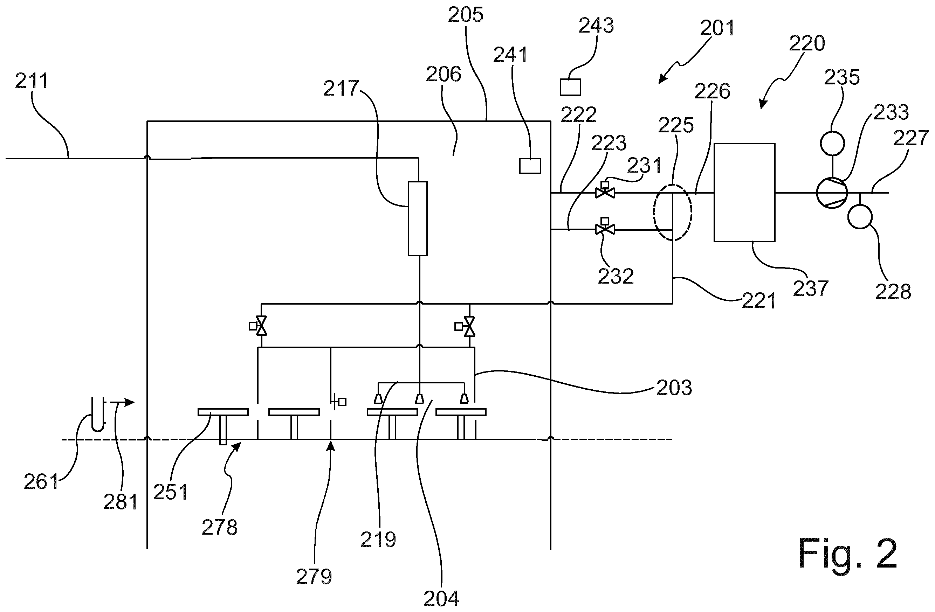

- Figur 2: eine Übersichtsdarstellung einer Sterilisationsanlage anhand einer detaillierten Schaltskizze.

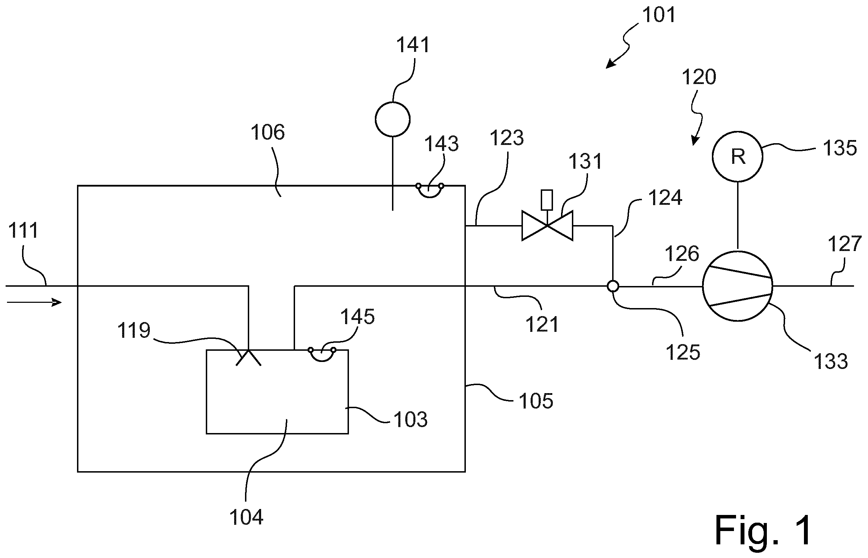

Eine Anlage 101 dient dem Sterilisieren von Behältern, insbesondere Nahrungsmittelbehältern. Beispielsweise werden dabei sogenannte Kunststoff-Preformlinge für einen Streckblasprozess oder auch fertig hergestellte Nahrungsmittelbehälter in die Anlage 101 eingebracht. Es sei darauf hingewiesen, dass die Anlage 101 dabei in Figur 1 insbesondere schematisch dargestellt ist und Details bezüglich der Behälter nicht dargestellt sind.

Innerhalb einer Einhausung 103 ist ein Behandlungsraum 104 angeordnet, wobei im Behandlungsraum 104 das Behandeln der Behälter oder Behälterrohlinge erfolgt. Dabei wird über eine Zuführung 111 und eine Düse 119 ein Sterilisationsmittel (nicht dargestellt) in dem Behandlungsraum 104 eingebracht. Das Sterilisationsmittel ist hier Wasserstoffperoxid (H₂O₂) in wässriger Lösung. Ein Zugangsbereich 106 ist in einer Einhausung 105 angeordnet, wobei die Einhausung 105 die Einhausung 103 umgibt. Beispielsweise kann die Einhausung 105 dabei eine Begrenzung der Gesamtanlage darstellen.

Eine Abluftvorrichtung 120 dient der Absaugung von schädlichen Atmosphären im Behandlungsrum 104 und dem Zugangsbereich. Die Abluftvorrichtung 120 ist wie folgt ausgeführt: Mittels einer Hauptleitung 121 wird aus dem Behandlungsraum 104 eine insbesondere gasförmige Phase, also flüchtige Bestandteile, des Sterilisationsmittels abgeführt. Dazu ist die Hauptleitung 121 über eine Leitung 126 mit einem Gebläse 133 verbunden. Das Gebläse fördert sodann die flüchtigen Bestandteile über eine Abluftleitung 127 beispielsweise aus einem Gebäude.

Durch beispielsweise Undichtigkeiten der Einhausung 103 oder notwendige Durchbrüche und Schleusen für die Behälter kann im Zugangsbereich 106 ebenfalls eine erhöhte Konzentration flüchtiger Bestandteile des Sterilisationsmittels vorliegen. Ein Sensor 141 kann diese detektieren, es sei wie beschrieben vorliegend davon ausgegangen, dass Wasserstoffperoxid verwendet wird. Ebenso kann aber auch ein chlorhaltiges Sterilisationsmittel verwendet werden. Der Sensor 141 ist dabei insbesondere auf das jeweilige Sterilisationsmittel und/oder auf durch die Sterilisation entstehende Reaktionsprodukte abgestimmt und kann deren Konzentration im Zugangsbereich 106 detektieren und insbesondere quantitativ messen.

Mittels einer Zusatzleitung 123 kann über ein Ventil 131 eine Leitung 124 an die Leitung 126 gekoppelt werden. Dazu sind die Hauptleitung 121, die Leitung 126 sowie die Leitung 124 an einem Knotenpunkt 125 luftführend miteinander verbunden. Es sei darauf hingewiesen, dass das Ventil 131 insbesondere ein motorisches, beispielsweise pneumatisch oder elektrisch geschaltetes, gesteuertes oder geregeltes, Ventil ist und beispielsweise anhand des Sensors 141 geöffnet oder geschlossen wird.

Sofern nun eine erhöhte Konzentration der flüchtigen Bestandteile des Sterilisationsmittels im Zugangsbereich 106 detektiert wird, indem der Sensor 141 eine erhöhte Konzentration feststellt, wird das Ventil 131 in eine offene Position überführt und gibt damit den Luftweg zwischen der Zusatzleitung 123 und der Leitung 124 frei. Das Gebläse 133 fördert nun sowohl aus dem Behandlungsbereich 104 als auch aus dem Zugangsbereich 106 Abluft in Richtung der Abluftleitung 127. Folglich wird zusätzlich zur Absaugung des Behandlungsbereichs 104 auch eine Konzentration der flüchtigen Bestandteile des Sterilisationsmittels im Zugangsbereich 106 abgesenkt. Weiterhin ist ein Drucksensor 143 im Zugangsbereich 106 angeordnet. Dieser Drucksensor 143 ist zum Messen des Drucks des Zugangsbereiches 106 eingerichtet, wobei dieser beispielsweise zur redundanten Drucküberwachung dienen kann. Ein weiterer Drucksensor 145 ist zum Messen des Drucks im Behandlungsbereich 104 eingerichtet. Damit kann beispielsweise ein Steuern oder Regeln des Gebläses 133 derart erfolgen, dass ein Druck im Behandlungsbereich, beispielsweise aus hygienischen Gründen, konstant gehalten wird. Ebenso kann ein gezieltes Steuern oder auch Verhindern von Luftströmungen zwischen dem Behandlungsbereich 104, dem Zugangsbereich 106 und/oder anderen Bereichen erfolgen.

Eine Regelung 135, welche das Gebläse 133 steuert oder regelt, kann, beispielsweise alternativ oder auch zusätzlich zu diesen Druckregelungen, dazu genutzt werden, dass beispielsweise im geöffneten Zustand des Ventils 131 die Leistung des Gebläses 133 erhöht wird, um dem zusätzlichen Absaugquerschnitt der geöffneten Zusatzleitung 123 Rechnung zu tragen.

In einer Alternativen kann die Zusatzleitung 123 an mindestens ein weiteres Gebläse (nicht dargestellt) angeschlossen werden. Mittels des Sensors 141 kann dieses Zusatzgebläse die Absaugung des Zugangsbereiches 106 ausführen. In diesem Fall kann dann auch auf eine Nachregelung des Gebläses 133 verzichtet werden.

Eine Sterilisationsanlage 201 ist analog dem vorigen Beispiel aufgebaut und zeigt detailliert den Vorgang zum Sterilisieren von Rohlingen 261 für die Herstellung von Streckblasbehältern für beispielsweise Getränke.

Eine Einhausung 203 umgibt dabei einen Behandlungsraum 204, eine Einhausung 205 einen Zugangsbereich 206. Der Zugangsbereich 206 wird dabei beispielsweise von Personal betreten, wenn Wartungen durchgeführt werden müssen, Einstellungen vorgenommen oder auch Bauteile ausgetauscht oder auch repariert. Aus diesem Grund muss im Zugangsbereich 206 eine für das Personal zulässige Konzentration flüchtiger Bestandteile eines Sterilisationsmittels eingehalten werden.

Innerhalb des Behandlungsraums 204 wird dabei eine Sterilisation der Rohlinge 261 vorgenommen, indem beispielsweise ein wasserstroffperoxidhaltiges Sterilisationsmittel eingebracht wird. Es sei darauf hingewiesen, dass die Rohlinge 261 dabei entlang einer Durchlaufrichtung 281 in einem Fließprozess behandelt werden.

Mittels einer Zuführung 211 kann das Sterilisationsmittel eingebracht werden. Eine Heizung 217 dient dabei dem Aufwärmen und/oder Verdampfen des Sterilisationsmittels. Sodann wird das Sterilisationsmittel über ein Düsenfeld 219 im Behandlungsraum 204 ausgebracht. Es sei hierzu angemerkt, dass auch eine einzelne Düse oder ergänzend einzelne Düsen an jeweiligen technisch notwendigen Punkten verwendet werden kann.

Die Rohlinge 261 werden dabei auf Fördersternen 251 transportiert, wobei ein Einbringen der Rohlinge durch ein Tor 278 und ein Weiterführen der Rohlinge durch ein Tor 279, bevor dann die Rohlinge 261 in den Behandlungsraum 204 eingebracht werden. Im Behandlungsraum 204 erfolgt dann das Einbringen des Sterilisationsmittels.

Die Sterilisationsanlage 201 weist eine Abluftvorrichtung 220 auf, welche wie folgt ausgeführt ist:

Mittels einer Hauptleitung 221 werden unterschiedliche Bereiche des Behandlungsraums 204 konstant abgesaugt. Dazu ist die Hauptleitung 221 über eine Zusammenführung 225 sowie eine Leitung 226 an ein Gebläse 233 angeschlossen. Das Gebläse 233 fördert Luft in Richtung einer Abluftleitung 227, beispielsweise aus dem Gebäude heraus. Dazu dient ein Sensor 228 dem Überwachen zusätzlicher Konzentrationen in der Abluft oder auch einem Messen eines Durchflusses von Abluft, beispielsweise zum Regeln eines bestimmten Durchflusses von Abluft mittels der Regelung 235 und dem Gebläse 233.

An der Hauptleitung 221 ist der Behandlungsraum 204 angeschlossen, damit erfolgt eine konstante Absaugung aus dem Behandlungsraum 204, womit beispielsweise eine konstante Behandlungskonzentration in Zusammenhang mit dem zugeführten Sterilisationsmittel eingestellt wird. Hierzu kann im Behandlungsraum 204 analog zum Sensor 145 im vorigen Beispiel auch ein entsprechender Sensor, beispielsweise ein Drucksensor, (nicht bildlich dargestellt) angeordnet sein, um definierte Bedingungen im Behandlungsraum sensorisch und/oder regelungstechnisch sicherzustellen.

Tritt nun ein flüchtiger Anteil des Sterilisationsmittels in den Zugangsraum oder Zugangsbereich 206, so dient ein Sensor 241 dazu, entsprechende Konzentrationen aufzunehmen und bei Überschreiten einer Referenzkonzentration, beispielsweise einer zulässigen Arbeitskonzentration, einen Sonderbetriebszustand der Sterilisationsanlage 201 einzustellen. Dazu werden Ventile 231 und 232 geöffnet sowie über eine Regelung 235 die Drehzahl des Gebläses 233 erhöht. Mittels der Ventile 231 und 232 werden Zusatzleitungen 222 und 223 an unterschiedlichen Stellen des Zugangsraums 206 geöffnet, welche über die Ventile 231 und 232 an die Zusammenführung 225 und damit auch an das Gebläse 233 angeschlossen sind. Folglich erfolgt neben den vorig bezeichneten Absaugtätigkeiten durch das Gebläse 233 auch ein Absaugen einer eventuell schädlichen Konzentration des Sterilisationsmittels aus dem Zugangsraum 206. Dabei kann eine Regelung der Drehzahl des Gebläses 233 beispielsweise auch stufenlos erfolgen.

Es sei hierzu erwähnt, dass wie auch für das vorig beschriebene Beispiel in einer Alternativen ein separates Gebläse (nicht dargestellt) neben dem Gebläse 233 eingesetzt werden kann, welches aus den Zusatzleitungen 222 und 223 ein Absaugen der schädlichen Konzentration des Sterilisationsmittels aus dem Zugangsbereich 206 in Richtung einer separaten Abluftleitung (nicht dargestellt) durchführt.

Weiterhin ist in der Leitung 226 vor dem Gebläse 233 oder für die oben genannte Alternative auch für jeweilige Abluftleitungen ein Katalysator 237 angeordnet, welcher schädliche Konzentrationen oder beispielsweise auch gesundheitsgefährdende Anteile des Sterilisationsmittels oder dessen flüchtiger Bestandteile vor Eintritt in das Gebläse 233 und damit insbesondere vor Austritt aus der Abluftleitung 227 beispielsweise in eine Umwelt absenkt, reduziert oder umwandelt. Es sei zusätzlich erwähnt, dass auch eine Druckregelung analog zum vorigen Beispiel für dieses Ausführungsbeispiel anwendbar ist. Ergänzend sei erwähnt, dass eine Detektion von aus der Einhausung 205 austretenden Anteilen des Sterilisationsmittels mittels des Sensors 243 erfolgen kann, um beispielsweise eine Kontamination einer Umgebung zu reduzieren oder zu verhindern.

### Bezugszeichenliste

- 101: Anlage
- 103: Einhausung
- 104: Behandlungsraum
- 105: Einhausung
- 106: Zugangsbereich
- 111: Zuführung
- 115: Düse
- 120: Abluftvorrichtung
- 121: Hauptleitung
- 123: Zusatzleitung
- 124: Leitung
- 125: Knotenpunkt
- 126: Leitung
- 127: Abluftleitung
- 131: Ventil
- 133: Gebläse
- 135: Regelung
- 141: Sensor
- 143: Drucksensor
- 145: Drucksensor
- 201: Sterilisationsanlage
- 203: Einhausung
- 204: Behandlungsraum
- 205: Einhausung
- 206: Zugangsbereich
- 211: Zuführung
- 217: Heizung
- 219: Düsenfeld
- 220: Abluftvorrichtung
- 221: Hauptleitung
- 222: Zusatzleitung
- 223: Zusatzleitung
- 225: Zusammenführung
- 226: Leitung
- 227: Abluftleitung
- 228: Sensor
- 231: Ventil
- 232: Ventil
- 233: Gebläse
- 335: Regelung
- 237: Katalysator
- 241: Sensor
- 243: Sensor
- 251: Förderstern
- 261: Rohling
- 278: Tor
- 279: Tor
- 281: Durchlaufrichtung

## Patentansprüche

1. Behälterbehandlungsvorrichtung (101, 201), insbesondere Streckumformvorrichtung, Streckblasvorrichtung, Streckblasanlage, Streckfüllvorrichtung oder Formfüllstreckvorrichtung, zum Verarbeiten von Nahrungsmittelbehältern (261), mit einem Behandlungsbereich (104, 204) und einem den Behandlungsbereich (104, 204) umgebenden begehbaren Zugangsbereich (106, 206), wobei die Nahrungsmittelbehälter (261) im Behandlungsbereich (104, 204) insbesondere mittels Streckformen, Streckblasen oder Formfüllstrecken verarbeitet werden, wobei anhaftende Mikroorganismen auf den jeweiligen Nahrungsmittelbehältern (261) mittels eines in den Behandlungsbereich eingebrachten Sterilisationsmittels reduziert und/oder entfernt werden, wobei eine Abluftvorrichtung eine mit dem Behandlungsbereich luftführend verbundene Abluftführung und eine mit der Abluftführung luftfördernd wirkverbundene Gebläsevorrichtung aufweist und die Abluftvorrichtung (120, 220) mittels der Gebläsevorrichtung in einem Normalbetriebszustand flüchtige Bestandteile des Sterilisationsmittels zum Einhalten einer zulässigen Behandlungsluftkonzentration aus dem Behandlungsbereich (104, 204) abführt, **dadurch gekennzeichnet, dass** die Abluftvorrichtung eine mit dem Zugangsbereich verbundene Zusatzabluftführung aufweist, wobei die Gebläsevorrichtung mit der Zusatzabluftführung luftfördernd wirkverbunden ist und die Abluftvorrichtung in einem Sonderbetriebszustand flüchtige Bestandteile des Sterilisationsmittels zum Einhalten einer zulässigen Zugangsluftkonzentration mittels der Gebläsevorrichtung aus dem Zugangsbereich abführt.

2. Behälterbehandlungsvorrichtung gemäß Anspruch 1, **dadurch gekennzeichnet, dass** die dem Behandlungsbereich zugeordnete Abluftführung und die dem Zugangsbereich zugeordnete Zusatzabluftführung zumindest teilweise als gemeinsame Abluftführung ausgeführt sind und/oder die Gebläsevorrichtung ein mit dem Behandlungsbereich luftfördernd wirkverbundenes Abluftgebläse und ein mit dem Zugangsbereich luftfördernd wirkverbundenes Zusatzabluftgebläse aufweist, wobei insbesondere das Zusatzabluftgebläse im Sonderbetriebszustand aktiviert ist.

3. Behälterbehandlungsvorrichtung gemäß Anspruch 1 oder 2, **dadurch gekennzeichnet, dass** der Zusatzabluftführung (123, 222, 223) ein Abluftventil (131, 231, 232) zugeordnet ist, wobei das Abluftventil (131, 231, 232) eine geschlossene Position und eine offene Position aufweist und die Zusatzabluftführung (123, 222, 223) in der offenen Position des Abluftventils (131, 231, 232) mit der Gebläsevorrichtung, insbesondere mit dem Zusatzabluftgebläse, verbunden ist, womit im Sonderbetriebszustand eine zeitweilige erhöhte Konzentration der flüchtigen Bestandteile im Zugangsbereich (106, 206) mittels der Gebläsevorrichtung, insbesondere mittels des Zusatzabluftgebläses (133, 233) durch die Zusatzabluftführung (123, 222, 223) abführbar ist.

4. Behälterbehandlungsvorrichtung gemäß Anspruch 3, **dadurch gekennzeichnet, dass** dem Zugangsbereich (106, 206) ein Konzentrationssensor (141, 241) mit einer Schalteinrichtung zugeordnet ist, wobei die Schalteinrichtung dazu eingerichtet ist, den Sonderbetriebszustand einzustellen und/oder das Abluftventil (131, 231, 232) bei einem Detektieren eines Überschreitens einer Referenzkonzentration im Zugangsbereich (106, 206) mittels des Konzentrationssensors (141, 241) in die offene Position überführt wird.

5. Behälterbehandlungsvorrichtung gemäß einem der vorherigen Ansprüche, **dadurch gekennzeichnet, dass** der Gebläsevorrichtung eine Steuerungseinrichtung (135, 235) oder eine Regelungseinrichtung (135, 235) zugeordnet ist, wobei die Steuerungseinrichtung (135, 235) oder die Regelungseinrichtung (135, 235) eingerichtet ist, zumindest eine erste Leistungsstufe und eine gegenüber der ersten Leistungsstufe erhöhte zweite Leistungsstufe der Gebläsevorrichtung, insbesondere des Abluftgebläses (133, 233) und/oder des Zusatzabluftgebläses, einzustellen, wobei die zweite Leistungsstufe insbesondere in der offenen Position des Abluftventils (133, 233) aktiviert wird.

6. Behälterbehandlungsvorrichtung gemäß einem der vorherigen Ansprüche, **dadurch gekennzeichnet, dass** die Zusatzabluftführung (123, 222, 223) mehrere Zusatzabluftrohre (123, 222, 223) aufweist, wobei die jeweiligen Zusatzabluftrohre (123, 222, 223) in einem Abstand voneinander an den Zugangsbereich (106, 206) angeschlossen sind.

7. Behälterbehandlungsvorrichtung gemäß einem der vorherigen Ansprüche, **dadurch gekennzeichnet, dass** in der Abluftführung ein Katalysator (237) zum Umwandeln und/oder Reduzieren der flüchtigen Bestandteile in einer Abluft, insbesondere ein Platinkatalysator, angeordnet ist.

8. Behälterbehandlungsvorrichtung gemäß einem der vorherigen Ansprüche, **dadurch gekennzeichnet, dass** die Behälterbehandlungsanlage eine Behälterherstellungsanlage, eine Streckblasmaschine, eine Formfüllanlage oder eine Füllanlage aufweist.

9. Behälterbehandlungsvorrichtung gemäß Anspruch 6, **dadurch gekennzeichnet, dass** der Behandlungsbereich (104, 204) ein Sterilisationsbereich einer Streckumformmaschine, einer Streckblasmaschine und/oder einer Füllsteckmaschine ist, wobei der Sterilisationsbereich entlang einer Verarbeitungsrichtung (281) insbesondere einem Streckumformbereich, einem Streckblasbereich oder einem Füllstreckbereich vorgelagert ist oder ein Sterilisationsbereich einer in Transportrichtung der Behälter stromaufwärts einer Streckumformmaschine, einer Streckblasmaschine oder einer Füllstreckmaschine vorgelagerter Transport-Zuführbereich ist.

10. Behälterbehandlungsvorrichtung gemäß einem der vorherigen Ansprüche, **dadurch gekennzeichnet, dass** einem den Zugangsbereich (106, 206) umgebenden Umgebungsbereich ein Umgebungssensor (243) zugeordnet ist, wobei bei einem Detektieren eines Überschreitens einer Referenzkonzentration im Umgebungsbereich mittels des Umgebungssensors (243) der Sonderbetriebszustand eingestellt und/oder eine Alarmeinrichtung auslösbar ist.

11. Behälterbehandlungsvorrichtung gemäß einem der vorherigen Ansprüche, **dadurch gekennzeichnet, dass** dem Behandlungsbereich und/oder dem Zugangsbereich ein insbesondere jeweiliger Drucksensor zugeordnet ist, wobei der insbesondere jeweilige Drucksensor zum Überwachen eines Druckes im Behandlungsbereich und/oder im Zugangsbereich eingerichtet ist.

12. Verfahren zum Absenken einer unzulässigen Konzentration eines flüchtigen Sterilisationsmittels im Zugangsbereich (106, 206) einer Behälterbehandlungsvorrichtung (101, 201), insbesondere einer Behälterbehandlungsvorrichtung (101, 201) gemäß einem der vorherigen Ansprüche 1 bis 9, mit den folgenden Schritten:
- Betreiben einer Behälterbehandlungsvorrichtung (101, 201) im Normalbetriebszustand, wobei flüchtige Bestandteile des Sterilisationsmittels mittels einer Gebläsevorrichtung (133, 233) aus dem Behandlungsbereich (104, 204) abgeführt werden,
- Feststellen einer zeitweilig erhöhten Konzentration der flüchtigen Bestandteile im Zugangsbereich (106, 206) insbesondere mittels eines Konzentrationssensors (141, 241),
- Einstellen eines Sonderbetriebszustandes, insbesondere durch Öffnen eines Abluftventils (131, 231, 232), sodass das Abluftventil (131, 231, 232) insbesondere in der offenen Position ist und eine zeitweilige erhöhte Konzentration der flüchtigen Bestandteile im Zugangsbereich (106, 206) mittels der Gebläsevorrichtung (133, 233) durch die Zusatzabluftführung (123, 222, 223) abgeführt wird,
sodass die unzulässige Konzentration des flüchtigen Sterilisationsmittels im Zugangsbereich (106, 206) abgesenkt ist.

13. Verfahren gemäß Anspruch 10, **dadurch gekennzeichnet, dass** das Einstellen des Sonderbetriebszustandes anhand eines Sensorsignals des Konzentrationssensors (141, 241) erfolgt.

14. Verfahren gemäß Anspruch 10 oder 11, **dadurch gekennzeichnet, dass** das Feststellen der zeitweilig erhöhten Konzentration der flüchtigen Bestandteile anhand eines Vergleichens einer Konzentration der flüchtigen Bestandteile mit einer maximal zulässigen Konzentration der flüchtigen Bestandteile und/oder anhand eines Vergleichens einer Konzentration der flüchtigen Bestandteile mit einer maximal zulässigen Arbeitsplatzkonzentration im Zugangsbereich (106, 206) und/oder mit einem ersten Grenzwert und/oder einem zweiten Grenzwert, insbesondere mehrstufig gesteuert oder geregelt, erfolgt.

15. Verfahren gemäß einem der Ansprüche 10 bis 13, **dadurch gekennzeichnet, dass** das Ansteuern des Abluftventils und/oder des Abluftgebläses in Abhängigkeit von den durch einen Drucksensor erfassten Messwerten, insbesondere zum Einhalten eines Druckniveaus oder eines Referenzdrucks im Behandlungsbereich und/oder im Zugangsbereich (106, 206) und/oder im Behandlungsbereich (104, 204), erfolgt.
